# EUROPÄISCHE PATENTSCHRIFT

(11) **EP 0 767 190 B1**
(45) Veröffentlichungstag und Bekanntmachung des Hinweises auf die Patenterteilung: **28.02.2001**
(21) Anmeldenummer: 96115669.2
(22) Anmeldetag: 30.09.1996
(51) Int. Cl.: C08G 69/26, C08G 69/14, C08G 69/28, C08G 69/16, B32B 27/08, B32B 27/34, C08L 77/00

(54) **Haftvermittler auf Polyamidbasis**
Adhesive agent based on polyamide
Agent adhésif à base de polyamide

(30) Priorität: 04.10.1995 DE 19537003
(43) Veröffentlichungstag der Anmeldung: 09.04.1997
(73) Patentinhaber: EMS-INVENTA AG, 8002 Zürich (CH)
(72) Erfinder: Stoeppelmann, Georg, Dr. rer. nat., CH-7402 Bonaduz (CH)
(74) Vertreter: Becker Kurig Straus

(56) Entgegenhaltungen:
- EP-A- 0 101 207
- EP-A- 0 523 644
- EP-A- 0 637 509
- EP-A- 0 649 738
- DE-A- 1 420 696
- JP-A- 4 008 729
- US-A- 5 383 087
- DATABASE WPI Section Ch, Week 9508 Derwent Publications Ltd., London, GB; Class A17, AN 95-057410 XP002022565 & JP 06 336 580 A (TORAY IND INC) , 6.Dezember 1994

## Beschreibung

Die Erfindung betrifft den in den Patentansprüchen angegebenen Gegenstand.

Die Erfindung betrifft insbesondere einen neuartigen Haftvermittler auf Polyamidbasis, der thermoplastisch verarbeitbare Fluorpolymere, insbesondere auf Basis von Vinylidenfluorid (VDF), oder auf Basis von Tetrafluorethylen (TFE), Hexafluorpropylen (HFP) und Vinylidenfluorid (VDF), oder auf Basis von TFE, PMVE und VDF, kraftschlüssig mit Polyamiden verbindet. Schichten aus den erfindungsgemäßen Haftvermittler-Polyamidmassen können in Mehrschichtverbunden als Zwischenschichten eingesetzt werden, um eine kraftschlüssige Verbindung der einzelnen Schichten zu erreichen. Die erfindungsgemäßen Mehrschichtverbunde finden bei Konstruktionsteilen im Bereich der Elektro-, Maschinenbau- und Automobilindustrie dort Verwendung, wo die nachteiligen Eigenschaften des Polyamids durch eine Kombination mit Fluorpolymeren ausgeglichen werden sollen. Insbesondere finden sie auch Anwendung als Folien oder als Mehrschichtrohre, z.B. im Bereich der KFZ-Industrie. Die Erfindung betrifft daher auch einen Polyamid-Haftvermittler, der insbesondere im Koextrusionsprozeß eingesetzt werden kann, um Rohre aus Polyamid, insbesondere aus Polyamid 12 und Fluorpolymeren, d.h. einem Terpolymeren aus VDF, TFE und HFP kraftschlüssig miteinander zu verbinden. Diese Verbindung zwischen den einzelnen Schichten ist direkt nach der Rohrextrusion vorhanden und bleibt auch nach dem Eintauchen dieser erfindungsgemäßen Mehrschichtrohre im Kraftstoff bestehen.

Polyamide bzw. Fluorpolymere sind für eine Reihe von Anwendungen ungeeignet. Polyamide sind z.B. nicht witterungsbeständig, da sie unter Belichtung altern sowie Luftfeuchtigkeit aufnehmen. Dies kann zu Verfärbungen und Verschlechterung der mechanischen Eigenschaften führen. Obwohl.Polyamide sehr gute mechanische Eigenschaften wie gute Zähigkeit usw. aufweisen, besitzen sie jedoch eine schlechte Barrierewirkung gegenüber polaren Substanzen, die leicht durch Polyamide migrieren können. Dies ist beispielsweise bei Kraftstoffleitungen im Hinblick auf die immer strenger werdenden Umweltschutz- und Sicherheitsvorschriften unerwünscht.

Ein weiterer Nachteil von insbesondere einschichtigen Kraftstoffleitungen aus Polyamid, speziell aus Polyamid 11 oder 12 besteht in einem beträchtlichen Aufnahmevermögen der Polymere für spezielle Bestandteile der Kraftstoffe, was zu Quellvorgängen und somit zu Längenänderungen der Rohrleitungen führt.

Aus den USA sind Entwicklungen bekannt, bei welchen Fluorpolymere als Barriereschichten zum Einsatz kommen sollen. Diese Polymere sind nicht nur sehr teuer, sondern auch schwer zu verarbeiten, schwer zu entsorgen und zeigen in der Koextrusionsverarbeitung nur geringe Verbundhaftung bzw. sie sind sogar mit Polyamiden unverträglich, was bei der Herstellung von Mehrschichtverbunden keine ausreichende Haftung zwischen den Laminatschichten ergibt. Ein kraftschlüssiger thermoplastischer Mehrschichtverbund ist aber bei technischen Anwendungen unbedingt erforderlich.

Es wurden deshalb Entwicklungen durchgeführt, um die vorgenannten Systeme zu verbessern.

US-5,383,087 beschreibt Mehrschichtrohre mit Fluorpolymer-Innenschicht und einer Außenschicht aus Polyamid 6, Polyamid 12 oder Polypropylen. Als Haftvermittler zwischen diesen beiden Schichten werden Fluorpolymer-Polyamidblends eingesetzt. Diese Haftvermittler nutzen jedoch nur physikalische Wechselwirkungen aus und besitzen daher relativ niedrige Haftwerte. Weiterhin ist die Verwendung eines Fluorpolymer-Polyamidblends problematisch, da langfristig eine Dehydrofluorierung der Fluorpolymere verursacht wird und ein Abbau der Fluorpolymere stattfindet. Der dabei entstehende Fluorwasserstoff ist ein stark korrosives, die Atemwege reizendes Gas, was aus Umweltschutz- und Sicherheitsüberlegungen unerwünscht ist.

EP 637 509 A1 beschreibt Fünfschichtrohre aus Fluor-Polymeren, Polyestern und Polyamiden. Die zwei Haftvermittlerschichten sind aus thermoplastischem Polyurethan, Polyetherblockamiden, Polyesterblockamiden, Polyolefinen, Polyestercopolymeren ausgebildet.

DE 43 26 130 A1 beschreibt Mehrschichtverbunde aus Polyamid und Polyvinylidenfluorid (PVDF). Das Problem der kraftschlüssigen Verbindung wird durch Zugabe von Polymethacrylimid zu PVDF gelöst. Nachteilig ist jedoch bei Rohren, in denen PVDF als Barriereschicht verwendet wird, ihre geringe Flexibilität, was bei engen Biegeradien zum Knicken des Rohres führen kann.

EP 0 101 207 A1 beschreibt Polyamidzusammensetzungen, die eine verbesserte Adhäsion zu verschiedenen Farbanstrichen aufweisen. Diese Farben können Acrylmelamin-, Urethan-, Acrylurethan- und Melaminalkydtyp-Farben sein. Das Polyamid weist ein Verhältnis der Aminoendgruppen zu den Carboxyendgruppen von mindestens 1,5 auf.

Daher ist es Aufgabe der Erfindung, Haftvermittler auf Polyamidbasis bereitzustellen, die thermoplastisch verarbeitbare Fluorpolymere, insbesondere Fluorpolymere auf Basis von TFE, HFP und VDF kraftschlüssig mit Polyamiden verbinden. Weiterhin sollen thermoplastische Mehrschichtverbunde aus diesen Fluorpolymer- und Polyamidformmassen bereitgestellt werden. Die Formmassen und die daraus hergestellten thermoplastischen Mehrschichtverbunde sollen folgende Forderungen erfüllen:
- Die Formstoffe aus den Fluorpolymeren und Polyamid sollen kraftschlüssig im thermoplastischen Mehrschichtverbund aufeinanderhaften.
- Der thermoplastische Mehrschichtverbund zwischen Fluprpolymer- und den Polyamidformstoffen soll gegen Kraftstoffe beständig und eine ausreichend geringe Permeation zeigen.
- Die heutigen Umweltschutz- und Sicherheitsbestimmungen für Kraftstoffleitungen sollen erfüllt werden.

Diese Aufgabe wird durch den Haftvermittler auf Polyamidbasis, der thermoplastisch verarbeitbare Fluorpolymere, insbesondere solche auf Basis von TFE, VDF und HFP kraftschlüssig mit Polyamiden verbindet, gemäß Patentanspruch 1 gelöst. Danach besteht der erfindungsgemäße Haftvermittler aus einem Basispolyamid mit Aminoendgruppenüberschußund mindestens einem, dem auspolymerisierten Polyamid zugesetzten Diamin. Das Diamin ist ausgewählt aus der Gruppe aus substituierten oder unsubstituierten aliphatischen C₄ bis C₂₀ Diaminen Es können aber auch Gemische von Diaminen eingesetzt werden.

Überraschenderweise wurde festgestellt, daß nur die Kombination aus Diamin (Dodecandiamin oder Decandiamin) und einem Polyamid mit NH₂-Endgruppenüberschuß, d.h. insbesondere Polyamid 12 optimale Haftwerte ergibt, da offensichtlich eine direkte chemische Reaktion zwischen dem Haftvermittler und dem Fluorpolymeren in der Grenzschicht stattfindet. Wird nämlich ein Polyamid und insbesondere Polyamid 12 mit Aminoendgruppenüberschuß ohne Diamin oder wird ein in den Endgruppen ausgeglichenes Polyamid, insbesondere Polyamid 12 zusammen mit Diamin als Haftvermittler eingesetzt, läßt sich beispielsweise nach dem Koextrusionsprozeß keine ausreichende Haftung erzielen.

Weiterhin wird die erfindungsgemäße Aufgabe durch den Mehrschichtverbund nach Anspruch 8 bzw. die Mehrschicht-Polymerschlauch- oder Rohrleitung nach Anspruch 10 gelöst.

In den Unteransprüchen sind vorteilhafte Ausführungsformen der Erfindung enthalten.

Als Polyamide im erfindungsgemäßen Sinne werden vorteilhafterweise Polykondensate aus aliphatischen Lactamen oder ω-Aminocarbonsäuren mit 4 bis 44 Kohlenstoffatomen, bevorzugt 4 bis 18 Kohlenstoffatomen, oder solche aus aromatischen ω-Aminocarbonsäuren mit 6 bis 20 Kohlenstoffatomen eingesetzt.

Ebenfalls geeignet sind Polykondensate aus mindestens einem Diamin und mindestens einer Dicarbonsäure mit jeweils 2 bis 44 Kohlenstoff-Atomen. Beispiele für solche Diamine sind Ethyldiamin, 1,4-Diaminobutan, 1,6-Diaminohexan, 1,10-Diaminodecan, 1,12-Diaminododecan, m- und p-Xylylendiamin, Cyclohexyldimethylenamin, Bis-(p-aminocyclohexyl)methan und seine Alkylderivate.

Beispiele für Dicarbonsäuren sind Bernstein-, Glutar-, Adipin-, Pimelin-, Kork-, Azelain- und Sebacinsäure, Dodecandicarbonsäure,1,6-Cyclohexandicarbonsäure, Terephthalsäure, Isophthalsäure und Naphthalindicarbonsäure.

Besonders geeignete Polyamide im erfindungsgemäßen Haftvermittler bzw. im Mehrschichtverbund bzw. in der Mehrschichtrohrleitung sind dabei Homo- und Copolyamide auf Basis von PA6, PA11, PA46, PA12, PA1212, PA1012, PA 610, PA612, PA69, PA6T, PA6I, PA10T, PA12T, PA12I, deren Gemische oder Copolymere auf Basis dieser Polyamide, wobei PA11, PA12, PA1212, PA10T, PA12T bevorzugt sind. Bevorzugt sind auch Copolymere auf Basis von den vorgenannten Polyamiden wie z.B. 12T/12, 10T/12, 12T/106 und 10T/106. Weiterhin können erfindungsgemäß auch Nylon 6/66, Nylon 6/612, Nylon 6/66/610, Nylon 6/66/12, Nylon 6/6T und Nylon 6/61 eingesetzt werden. Diesen (Co)Polyamiden können aber auch für bestimmte Zwecke noch andere, übliche Polymere zugesetzt sein. Die erfindungsgemäß verwendeten (Co)Polyamide können die üblichen Zusatzstoffe enthalten wie UV- und Hitzestabilisatoren, Kristallisationsbeschleuniger, Weichmacher, Flammenschutzmittel, Gleitmittel, anorganische Füllstoffe und Additive, welche die elektrische Leitfähigkeit erhöhen.

Weiterhin können den Polyamiden auch Verstärkungs- bzw. Füllstoffe wie Glasfasern oder Kohle- oder Mineralfasern zugesetzt sein. In bevorzugten Ausführungsformen der Erfindung wird Polyamid 12 eingesetzt. Das Polyamidmaterial für den Haftvermittler zeichnet sich insbesondere durch einen Aminoendgruppenüberschuß aus, d.h. das Endgruppenverhältnis von -NH₂- : -COOH- Gruppen beträgt 1,5 : 1 bis 3 : 1, wobei 2,5 : 1 besonders bevorzugt ist. Das Basispolyamid weist eine relative Viskosität von 1,7 bis 2,5, insbesondere von 2,1 (gemessen in einer 0,5%igen m-Kresol-Lösung bei 25°C gemäß DIN53727/ISO 307) auf.

Das Problem der Haftung zwischen den beiden erwähnten Polymeren, d.h. zwischen Polyamid-Außenschicht und Fluorpolymer-Innenschicht wird in einer besonderen Ausführungsform der Erfindung dadurch gelöst, daß ein Polyamid 12 mit einer Lösungsviskosität von 2,10 und einer Carboxylendgruppenzahl von ca. 20 µÄq/g und einer NH₂-Endgruppenzahl von 50 µÄq/g und ein Diamin wie Decandiamin oder Dodecandiamin zusammen extrudiert werden. Insbesondere geht dies so vor sich, daß man zunächst das Polyamid auspolymerisieren läßt und diesem dann die gewünschte Menge Diamin zudosiert bzw. in einem separaten Extrusionsschritt einmischt. Das Diamin wird in Mengen von 0,25 bis 2 Gew.-%, insbesondere in Mengen von 1 Gew.-% einextrudiert.

Das Diamin ist in einer bevorzugten Ausführungsform ausgewählt aus der Gruppe, die aus Hexamethylendiamin, langkettigen C₁₀-C₁₄-Diaminen und deren Gemischen besteht. Dabei ist Decandiamin und Dodecandiamin besonders bevorzugt.

Wird das PA12 mit Aminoendgruppenüberschuß ohne Diamin oder wird ein in den Endgruppen ausgeglichenes PA12 zusammen mit Diamin als Haftvermittler eingesetzt, so läßt sich direkt nach dem Koextrusionsprozeß der jeweiligen Polymermassen keine ausreichende Haftung erzielen. Diese Haftung wird in dem nicht erfindungsgemäßen Fall erst nach einer Ofenlagerung (Tempern) bei 100 bis 130°C oder nach mehrtägigem Lagern bei Raumtemperatur erreicht.

Als Fluorpolymere kommen insbesondere solche Terpolymere auf Basis von TFE, HFP und VDF, aber auch solche auf Basis von TFE, PMVE und VDF in Betracht.

Weiterhin können erfindungsgemäß auch VDF-Copolymere eingesetzt werden.

Bevorzugt erfolgt die Herstellung des erfindungsgemäßen Haftvermittlers durch einen Extrusionsdurchgang der einzelnen Bestandteile. Daher kommt auch in einer besonderen Anwendungsform der Erfindung ein Pulvergemisch der einzelnen Komponenten, d.h. des Polyamidgranulats und des Diaminpulvers zum Einsatz.

Die Fertigung der erfindungsgemäßen Mehrschichtverbunde kann ein- oder mehrstufig erfolgen. Beim einstufigen Extrusionsverfahren werden in üblicher Weise die verschiedenen Schmelzen koextrudiert. Bei den mehrstufigen Verfahren wird zunächst ein Formteil aus der einen Komponente hergestellt und dann mit den übrigen Komponenten durch Pressen, Spritzgießen oder Extrudieren verbunden.

Die erfindungsgemäßen Mehrschichtverbunde zeigen in hervorragendem Maße eine gute Beständigkeit sowie eine gute Sperrwirkung gegenüber chemischen Reagenzien, Lösungsmitteln und Kraftstoffen. Ferner sind die Schichten kraftschlüssig miteinander verbunden.

Diese Verbindung ist direkt nach der Extrusion vorhanden und bleibt auch nach dem Eintauchen der Verbunde in Kraftstoff bestehen.

Die erfindungsgemäßen Mehrschichtverbunde finden bei Konstruktionsteilen vor allem im Bereich der Automobil-, Elektro-, Maschinenbau-Industrie Verwendung. Insbesondere finden sie Verwendung als Folien oder als Mehrschichtrohre im Kfz-Bereich.

Die erfindungsgemäßen Mehrschicht-Polymer- oder Rohrleitungen, die ggf. auch in mindestens einem Teilbereich gewellt sein können, bestehen aus einer Innenschicht aus Fluorpolymeren auf Basis von VDF, einer Polyamidaußenschicht und einer zwischengelagerten Polyamid-Haftvermittlerschicht. Das Basismaterial des Haftvermittlers zeichnet sich, wie oben ausgeführt ist, mit einem Aminoendgruppenüberschuß aus. Es enthält weiterhin ein zugesetztes Diamin. Die Innenschicht der erfindungsgemäßen Polymerleitung ist gegenüber dem zu transportierenden Medium inert; die Außenschicht ist gegenüber Druck und mechanischen Einflüssen beständig.

Die Schichtdicke der erfindungsgemäßen Schlauch- oder Rohrleitung ist unkritisch. Bevorzugt sind
Außenschichtdicken im Bereich von 0,2 bis 0,8 mm,
Haftschichtdicken im Bereich von 0,05 bis 0,3 mm und
Innenschichtdicken im Bereich von 0,01 bis 0,7 mm.

Wie oben ausgeführt ist, ist es möglich, daß die Wandung der Schlauch- oder Rohrleitung mit einer ring- oder spiralförmigen Wellung versehen ist, die Schutzschichten antistatisch, schlagzäh oder mit Weichmachern oder anderen Additiven nach dem Stand der Technik zu modifizieren bzw. durch Zugabe von Glasfasern längenstabil zu machen.

Die Erfindung betrifft aber auch Mehrschicht-Polymerleitungen, wobei die Leitung mindestens in einem Teilstück gewellt ist, und die durch die Wellen gebildeten Ringe um die Rohrleitungsachse verlaufen, wobei die Wellen zumindest teilweise in ovaler Form oder in Form einer Ellipse bzw. in Form eines an einer Seite abgeflachten Kreises ausgebildet sind. Derartige neue Geometrien, d.h. Ausformung der Wellen von Rohrleitungen sind in der noch nicht offengelegten DE 44 32 584.3 (EMS-Inventa) beschrieben, auf die hiermit voll inhaltlich Bezug genommen wird.

Vorzugsweise ist dabei mindestens eine der Schichten elektrisch leitfähig eingestellt, wobei die innere Schicht einen Oberflächenwiderstand von beispielsweise kleiner 10⁹ Ω aufweist.

Die erfindungsgemäße Polymerleitung kann durch Koextrusion eines Polymerrohres und gegebenenfalls anschließender Ausbildung der Wellen samt gegebenenfalls vorhandener Abflachungen durch Blas- oder Saugformen hergestellt werden.

Die erfindungsgemäße Polymerrohrleitung kann aber auch durch Extrusionblasformen, Koextrusionsblasformen, sequentielles Blasformen mit oder ohne Schlauchmanipulationen hergestellt werden.

Die Erfindung soll nun anhand der folgenden Beispiele näher erläutert werden:

### Beispiele

Zur Herstellung von Dreischichtrohren auf handelsüblichen Koextrusions-Anlagen wurden die folgenden Polymere eingesetzt:
- Innenschicht:: Terpolymer aus Tetrafluorethylen, Hexafluorpropylen, Vinylidenfluorid (Handelsname THV 500G, 3M).
- Mittelschicht:: PA1: Polyamid 12 mit einer relativen Viskosität von 2,1 (gemessen in 0.5 % m-Kresol), COOH-Endgruppenzahl von 20 µÄq/g und einer NH₂-Endgruppenzahl von 50 µÄq/g.
PA2: Polyamid 12 mit einer relativen Viskosität von 2,25 (gemessen in 0.5 % m-Kresol), COOH-Endgruppenzahl von 40 µÄq/g und einer NH₂-Endgruppenzahl von 30 µÄq/g.-
PA3: 99 Gew.-% Polyamid PA 1, 1 Gew.-% Decandiamin
PA4: 99 Gew.-% Polyamid PA 1, 1 Gew.-% Dodecandiamin

Die Mittelschichtmaterialien PA3 und PA4 wurden auf gebräuchlichen Doppelschnecken-Extrudern hergestellt.
- Außenschicht:: Weichgemachtes PA12 (Grilamid L25W40X schwarz der Fa. EMS-Chemie, Schweiz)

Aus den obigen Materialien wurden glatte Dreischichtrohre (8x1 mm) hergestellt und geprüft. Zur Prüfung der Haftung wurden die Rohre spiralförmig angeschnitten. Anschließend wurde versucht, die Schichten mechanisch und durch Lagerung im Kraftstoff FAM B (DIN51604A) zu trennen.

Die Permeationsmessungen wurden in einer dynamischen Meßanordnung bei 60°C und 4 bar durchgeführt.

Die erhaltenen Ergebnisse sind in der untenstehenden Tabelle aufgeführt. Wie die Beispiele 3 und 4 (jeweils erfindungsgemäß) belegen, ist eine kraftschlüssige Verbindung der einzelnen Schichten direkt nach der Rohrextrusion vorhanden und bleibt auch nach dem Eintauchen dieser Rohre im Kraftstoff bestehen.

**Tabelle**

| Beispiel | 1 | 2 | 3 (erfindungsgemäß) | 4 (erfindungs-gemäß) |
|---|---|---|---|---|
| Rohraufbau von innen nach außen: | | | | |
| THV 500G | 0,2* | 0,2 | 0,2 | 0,2 |
| PA1 | 0,1 | | | |
| PA2 | | 0,1 | | |
| PA3 | | | 0,1 | |
| PA4 | | | | 0,1 |
| L25W40X schwarz | 0,7 | 0,7 | 0,7 | 0,7 |
| Mechanische Trennung direkt nach Extrusion | ja | ja | nein | nein |
| Trennung nach Lagerung in FAM B∗∗ bei 60°C | ja | ja | nein | nein |

| Mechanische Eigenschaften: | | | | |
|---|---|---|---|---|
| Kälteschlagzähigkeit -40°C, DIN 73378 | | | ohne Bruch | |
| Kälteschlag -40°C, SAE J844d | --- | --- | ohne Bruch | --- |
| Berstdruck 23°C | | | 65bar | |
| Flexibiltät SAE J844d | | | 13N | |
| Permeation FAM B, 60°C, 4 bar | | | 0,7 g/m/Tag | |

| | | | | |
|---|---|---|---|---|
| --- = nicht gemessen ∗ = Schichtdicke (mm) | | | | |
| ∗∗ = FAM B = Kraftstoff FAM B nach DIN 51604A | | | | |

## Patentansprüche

1. Haftvermittler-Formmasse auf Basis von Polyamid, dadurch gekennzeichnet, daß das Polyamid einen Amino-Endgruppen-Überschuß aufweist und mindestens ein dem auspolymerisierten Polyamid in Mengen von 0,25 bis 2 Gew.-% zugesetztes Diamin, ausgewählt aus substituierten oder unsubstituierten, aliphatischen Diaminen, deren Gesamtzahl an Kohlenstoffatomen 4 bis 20 beträgt, oder Gemischen davon, enthält, wobei das Polyamid eine relative Viskosität von 1,7 bis 2,5, gemessen in einer 0,5%igen m-Kresol-Lösung bei 25°C gemäß DIN 53727/ISO 307, aufweist, mit der Maßgabe, daß das Amino-Endgruppen- zu Carboxy-Endgruppen-Verhältnis des Basispolyamids im Bereich von 1,5 : 1 bis 3 : 1 liegt und der Wert 1,5 ausgenommen ist.

2. Haftvermittler gemäß Anspruch 1, dadurch gekennzeichnet, daß das zugesetzte Diamin in Mengen von 1 Gew.-% im Haftvermittler enthalten ist.

3. Haftvermittler gemäß Anspruch 1 oder 2, dadurch gekennzeichnet, daß das Diamin ausgewählt ist aus der Gruppe aus Hexamethylendiamin, Decandiamin und Dodecandiamin.

4. Haftvermittler gemäß einem der vorhergehenden Ansprüche, dadurch gekennzeichnet, daß das Polyamid ausgewählt ist aus der Gruppe aus PA6, PA11, PA12, PA46, PA1212, PA1012, PA610, PA612, PA69, PA6T, PA6I, PA10T, PA12T, PA12I, deren Gemische, oder Copolymere auf Basis der vorgenannten Polyamide.

5. Haftvermittler gemäß Anspruch 4, dadurch gekennzeichnet, daß das Polyamid PA11, PA12, PA1212, PA10T oder PA12T ist.

6. Haftvermittler gemäß einem der vorhergehenden Ansprüche, dadurch gekennzeichnet, daß das Amino-Endgruppen zu Carboxyl-Endgruppen-Verhältnis des Basispolyamids 2,5 : 1 ist.

7. Thermoplastischer Mehrschichtverbund, gekennzeichnet durch mindestens eine Innenschicht aus thermoplastisch verarbeitbaren Fluorpolymeren und mindestens eine Außenschicht aus Polyamid, wobei die Innen- und die Außenschicht durch mindestens eine haftvermittelnde Schicht aus einer Polyamid-Formmasse nach einem der Ansprüche 1 bis 6 kraftschlüssig miteinander verbunden sind.

8. Mehrschichtverbund nach Anspruch 7, dadurch gekennzeichnet, daß das Fluorpolymere ausgewählt ist aus Fluorpolymeren auf Basis von Tetrafluorethylen (TFE), Hexafluorpropylen (HFP) und Vinylidenfluorid (VDF) und Fluorpolymeren auf Basis von Tetrafluorethylen (TFE), Perfluormethylvinylether (PMVE) und Vinylidenfluorid (VDF).

9. Mehrschicht-Polymerschlauch- oder Rohrleitung, die gegebenenfalls mindestens in einem Teilbereich gewellt ist, gekennzeichnet durch
- mindestens eine Innenschicht aus thermoplastisch verarbeitbaren Fluorpolymeren
- mindestens eine haftvermittelnde Zwischenschicht auf Basis einer Formmasse nach einem der Ansprüche 1 bis 6 und
- mindestens eine Polyamidaußenschicht, wobei gegebenenfalls die mindestens eine Zwischenschicht zusätzlich Barrierefunktion haben kann.

10. Polymerleitung gemäß Anspruch 9, dadurch gekennzeichnet, daß das thermoplastische Fluorpolymere ausgewählt ist aus Fluorpolymeren auf Basis von VDF, TFE und HFP oder auf Basis von VDF, PMVE, TFE.

11. Polymerleitung gemäß Anspruch 9, dadurch gekennzeichnet, daß die Außenschicht Schichtdicken von 0,2 bis 0,8 mm, die Haftschicht Schichtdicken im Bereich von 0,05 bis 0,3 mm und die Innenschicht Schichtdicken im Bereich von 0,01 bis 0,7 mm aufweist.

12. Polymerleitung gemäß Anspruch 9 bis 11, dadurch gekennzeichnet, daß mindestens eine der Schichten elektrisch leitfähig eingestellt ist.

## Claims

1. Adhesive moulding composition based on polyamide, characterised in that the polyamide has an excess of terminal amino groups and contains at least one diamine, added to the polymerised-out polyamide in quantities of between 0.25 and 2 % by wt., selected from substituted or unsubstituted aliphatic diamines, the total number of carbon atoms of which diamines amount to between 4 and 20, or mixtures thereof, the polyamide having a relative viscosity of between 1.7 and 2.5, measured in a 0.5 % m-cresol solution at 25° C according to DIN 53727/ISO 307, with the proviso that the ratio of terminal amino groups to terminal carboxyl groups of the basic polyamide lies within the range of between 1.5 : 1 and 3 : 1, and the value 1.5 is excluded.

2. Adhesive according to claim 1, characterised in that the added diamine is contained in the adhesive in quantities of 1 % by wt.

3. Adhesive according to claim 1 or 2, characterised in that the diamine is selected from the group including hexamethylene diamine, decane diamine and dodecane diamine.

4. Adhesive according to one of the preceding claims, characterised in that the polyamide is selected from the group including PA6, PA11, PA12, PA46, PA1212, PA1012, PA610, PA612, PA69, PA6T, PA61, PA10T, PA12T, PA121, mixtures thereof, or copolymers based on the aforesaid polyamides.

5. Adhesive according to claim 4, characterised in that the polyamide is PA11, PA12, PA1212, PA10T or PA12T.

6. Adhesive according to one of the preceding claims, characterised in that the ratio of terminal amino groups to terminal carboxyl groups of the basic polyamide is 2.5 : 1.

7. Thermoplastic multilayer compound, characterised by at least one internal layer formed from thermoplastically processable fluoric polymers and at least one external layer formed from polyamide, the internal and external layers being positively interconnected by at least one adhesive layer formed from a polyamide moulding composition according to one of claims 1 to 6.

8. Multilayer compound according to claim 7, characterised in that the fluoric polymer is selected from fluoric polymers based on tetrafluoric ethylene (TFE), hexafluoric propylene (HFP) and vinylidene fluoride (VDF) and fluoric polymers based on tetrafluoric ethylene (TFE), perfluoric methyl vinyl ether (PMVE) and vinylidene fluoride (VDF).

9. Multilayer polymer tubing or hose pipe, which is possibly undulatory in at least one partial region, characterised by
- at least one internal layer formed from thermoplastically processable fluoric polymers
- at least one adhesive intermediate layer based on a moulding composition according to one of claims 1 to 6, and
- at least one polyamide external layer, at least one intermediate layer possibly being able to have a barrier function in addition.

10. Polymer hose according to claim 9, characterised in that the thermoplastic fluoric polymer is selected from fluoric polymers based on VDF, TFE and HFP or based on VDF, PMVE, TFE.

11. Polymer hose according to claim 9, characterised in that the external layer has layer thicknesses of between 0.2 and 0.8 mm, the adhesive layer has layer thicknesses in the range of between 0.05 and 0.3 mm, and the internal layer has layer thicknesses in the range between 0.01 and 0.7 mm.

12. Polymer hose according to claims 9 to 11, characterised in that at least one of the layers is made to be electrically conductive.

## Revendications

1. Agent adhésif à base de polyamide sous la forme de matière à mouler, caractérisé en ce que le polyamide présente un excès en groupements amino-terminaux et contient au moins une quantité de 0,25 à 2% en poids d'une diamine ajoutée pour la polymérisation du polyamide et sélectionnée parmi les diamines aliphatiques substituées ou non dont le nombre total d'atomes de carbone est compris entre 4 et 20, ou de mélanges de celles-ci, et pour lequel le polyamide présente une viscosité comprise entre 1,7 et 2,5, mesurée à 25°C dans une solution à 0,5% de m-crésol selon la norme DIN 53727 / ISO 307, avec pour condition essentielle que le rapport entre les groupements amino-terminaux et carboxy-terminaux dans le polyamide de base se situe dans un intervalle compris entre 1,5 :1 à 3 :1, la valeur 1,5 étant exclue.

2. Agent adhésif selon la revendication 1, caractérisé en ce que la diamine ajoutée est présente dans l'agent adhésif en des proportions de 1% en poids.

3. Agent adhésif selon la revendication 1 ou 2, caractérisé en ce que la diamine est sélectionnée parmi le groupe constitué par l'hexaméthylènediamine, la décanediamine et la dodécanediamine.

4. Agent adhésif selon l'une quelconque des revendications précédentes, caractérisé en ce que le polyamide est sélectionné parmi le groupe constitué par les PA6, PA11, PA12, PA46, PA1212, PA1012, PA610, PA612, PA69, PA6T, PA6I, PA10T, PA12T, PA12I, par un mélange de ceux-ci, ou par les copolymères basés sur ceux-ci.

5. Agent adhésif selon la revendication 4, caractérisé en ce que le polyamide est du PA11, du PA12, du PA1212, du PA10T ou du PA12T.

6. Agent adhésif selon l'une quelconque des revendications précédentes, caractérisé en ce que le rapport entre les groupements amino-terminaux et carboxy-terminaux dans le polyamide de base est de 2,5 :1.

7. Matériau composite thermoplastique à plusieurs couches, caractérisé par la présence d'au moins une couche interne constituée par des fluoropolymères thermoplastiques déformables et au moins une couche externe constituée par du polyamide, pour lequel les couches internes et externes sont associées par adhésion par au moins une couche d'agent adhésif à base de polyamide sous forme de matière à mouler selon l'une quelconque des revendications 1 à 6.

8. Matériau composite thermoplastique à plusieurs couches selon la revendication 7, caractérisé en ce que le fluoropolymère est sélectionné parmi les fluoropolymères basés sur le tétrafluoroéthylène (TFE), l'hexafluoropropyléne (HFP) et le vinylidènefluoride (VDF), et les fluoropolymères basés sur le tétrafluoroéthylène (TFE), le perfluorométhylvinyléther (PMVE) et le vinylidènefluoride (VDF).

9. Conduite sous la forme d'un tuyau ou d'un tube faite de plusieurs couches de polymère, présentant optionnellement des ondulations sur au moins un segment, caractérisé en ce qu'ellle comprend:
- au moins une couche interne constituée par des fluoropolymères thermoplastiques déformables,
- au moins une couche intermédiaire promotrice d'adhésion à base de polyamide sous forme de matière à mouler selon l'une quelconque des revendications 1 à 6, et
- au moins une couche externe constituée par du polyamide,
pour laquelle optionnellement la ou les couches intermédiaires puissent avoir additionellement une fonction de barrière.

10. Conduite selon la revendication 9, caractérisée en ce que le fluoropolymère thermoplastique est sélectionné parmi les fluoropolymères basés sur le VDF, le TFE et le HFP ou sur les fluoropolymères basés sur le VDF, PMVE et TFE.

11. Conduite selon la revendication 9, caractérisée en ce que les épaisseurs des couches externes sont comprises entre 0,2 et 0,8 mm, les épaisseurs des couches promotrices d'adhésion sont comprises entre 0,05 et 0,3 mm, et les épaisseurs des couches internes sont comprises entre 0,01 et 0,7 mm.

12. Conduite selon l'une quelconque des revendications 9 à 11, caractérisée en ce qu'au moins une des couches est rendue électriquement conductrice.
